(19) Europäisches Patentamt
European Patent Office
Office européen des brevets

(11) **EP 3 118 807 A1**

(12) **EUROPEAN PATENT APPLICATION**

(43) Date of publication:
**18.01.2017 Bulletin 2017/03**

(51) Int Cl.:
***G06Q 50/04*** *(2012.01)*

(21) Application number: **16179703.0**

(22) Date of filing: **15.07.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.07.2015 IN 2709MU2015**

(71) Applicant: **Tata Consultancy Services Limited Maharashtra (IN)**

(72) Inventors:
• **HIRPARA, Avni Odhavjibhai**
  **411013 Pune, Maharashtra (IN)**
• **SHIMPI, Vikrant Vikas**
  **411013 Pune, Maharashtra (IN)**
• **NATU, Maitreya**
  **411013 Pune, Maharashtra (IN)**
• **SADAPHAL, Vaishali Paithankar**
  **411013 Pune, Maharashtra (IN)**

(74) Representative: **Goddar, Heinz J.**
**Boehmert & Boehmert**
**Anwaltspartnerschaft mbB**
**Patentanwälte Rechtsanwälte**
**Pettenkoferstrasse 20-22**
**80336 München (DE)**

(54) **PRIORITIZING AND PLANNING ISSUES IN AUTOMATION**

(57) System and method for prioritizing and planning issues in automation is disclosed. The system and method prioritizes the issues by considering various cost and benefit factors associated with automation of the issues. The issues that are best suited for automation are identified and a plan for automation prioritization of the issues is presented. An approach to evaluate day-zero automation potential is disclosed. Further, a comprehensive blueprint of each issue is built in the form of an operations graph. The blueprint of each issue is analyzed and the issue is evaluated on various aspects of cost, quality, and risk. Further, a systematic plan for automation is made and a business case is generated.

Obtain one or more registered tickets comprising ticket description pertaining to one or more issues — 202

Map the ticket description of the registered tickets to one or more corresponding entries being present in one or more technology-specific service catalogs stored — 204

Determine at least one of composite matches and ambiguous matches by performing a comparison of (i) clauses in the ticket description from the registered tickets and (ii) the the corresponding entries stored in the the technology-specific service catalogs — 206

Identify at least a subset of the one or more registered tickets for day-zero automation resolution based on the composite matches — 208

Compute a match score for each registered ticket that pertains to the one or more ambiguous matches to obtain a set of ambiguously registered tickets — 210

Compute a priority score for each issue in the set of ambiguously registered tickets based on an analysis being performed on each issue in the set of ambiguously registered tickets based on criteria comprising cost, effort benefit, quality benefit, and risk to automatically prioritize issues from the set of ambiguously registered tickets — 212

**Figure 2**

**Description**

CROSS-REFERENCE TO RELATED APPLICATIONS AND PRIORITY

The present application claims priority to Indian provisional specification "PRIORITIZING AND PLANNING ISSUES IN AUTOMATION" No. 2709/MUM/2015, filed in India on July 17, 2015.

TECHNICAL FIELD

The embodiments described herein generally relate to addressing issues associated with automation, and more particularly to identifying issues associated with automation, prioritizing the issues, and recommending an automation plan for addressing the issues.

BACKGROUND

IT systems are fast moving towards automated support operations. Due to an increasing cost and variable quality of operations in manual resolution of issues, there is an increasing trend towards more automated ways of managing systems. Automation has direct benefits on cost and quality of operations. Cost is reduced because of reduction in human efforts and quality is improved due to decrease in resolution time, increase in predictability, and less variations in resolution due to standardization. However, automation involves a cost of human efforts to develop scripts for automation and a recurring cost of upgrades and maintenance.

Hence, it is imperative to evaluate cost and benefits derived from automation and carefully plan the automation. For instance, for short-lived issues having automation time very large benefit of automation can be reaped only for a short duration. Another example, when issues have a small cost of manual resolution but a large cost to implement automation, then automation is not useful. Thus, automation is not always a right solution. If automation is not carefully planned, then the automation may lead to minimal or no benefits. Further, incorrectly planned automation may result in no reduction in cost and minimal improvement in quality.

Prior art research is focused on ticket analysis, mainly in extracting issues from ticket descriptions, performing resolver analysis to identify expert resolvers, finding interesting patterns from tickets, and the like. However, there are no efforts focused on prioritizing issues in automation. The problem of prioritizing issues for automation is challenging. Simple solutions such as prioritize issues that occur most frequently, or consume maximum effort, are often not the best solution.

SUMMARY

The following description presents a simplified summary of some embodiments of the disclosure in order to provide a basic understanding of the embodiments. This summary is not an extensive overview of the embodiments. It is not intended to identify key/critical elements of the embodiments or to delineate the scope of the embodiments. Its sole purpose is to present some embodiments in a simplified form as a prelude to the more detailed description that is presented below. In view of the foregoing, an embodiment herein provides a system and method for prioritizing and planning issues in automation.

In one aspect, the system and method for prioritizing and planning issues in automation by considering various cost and benefit factors associated with automation of an issue is disclosed.

In another aspect, the system and method for identifying the issues that are best suited for automation, and presenting a plan for automation prioritization of the issues is disclosed.

In another aspect, the system and method discloses an approach to evaluate day-zero automation potential.

In another aspect, the system and method discloses an approach to build a comprehensive blueprint of each issue in the form of an operations graph.

Still in another aspect, the system and method discloses a technique to analyze the blueprint of each issue and evaluate the issue on various aspects of cost, quality, and risk.

Still in another aspect, the system and method discloses making a systematic plan for automation and generating a business case.

Embodiments of the present disclosure present technological improvements as solutions to one or more of the above-mentioned technical problems recognized by the inventors in conventional systems. For example, in one aspect, a processor implemented method is provided. The method, comprising: obtaining, by one or more hardware processors, one or more registered tickets comprising ticket description pertaining to one or more issues; mapping the ticket description of the one or more registered tickets to one or more corresponding entries being present in one or more technology-specific service catalogs stored in a memory. In an embodiment, the step of mapping the ticket description of the one or more registered tickets is preceded by removing at least one of one or more stop words, and one or more expressions from the ticket description. The method may further include determining, by the one or more hardware processors, at least one of one or more composite matches and one or more ambiguous matches by performing a comparison of (i) one or more clauses in the ticket description from one or more registered tickets and (ii) the one or more corresponding entries stored in the one or more technology-specific service catalogs; identifying, by the one or more hardware processors, at least a subset of the one or more registered tickets for day-zero automation resolution based on the one or more composite matches; computing, by the one or more hardware processors, a match score for each registered ticket that pertains to the one or more ambiguous matches to obtain a set of ambiguously registered tickets, wherein the match score is computed based number of clauses from the ticket description in the set of ambiguously registered ticket being ambiguously matched with the one or more corresponding entries stored in the one or more technology-specific service catalogs; and computing, by the one or more hardware processors, a priority score for each issue in the set of ambiguously registered tickets based on an analysis being performed on each the issue in the set of ambiguously registered tickets based on one or more criteria comprising cost, effort benefit, quality benefit, and risk to automatically prioritize one or more issues from the set of ambiguously registered tickets. In an embodiment, the step of performing an analysis is preceded by generating one or more issue blueprints for one or more issues in a ticket description associated with the set of ambiguously registered tickets. In an embodiment, the processor implemented method may further comprise automatically generating, by the one or more hardware processors, a prioritized list of registered tickets from the set of ambiguously registered tickets based on the priority score.

In an embodiment, the one or more generated issue blueprints may comprise at least one of an operational graph comprising at least one issue to be resolved, one or more entities associated with the at least one issue and a relationship across the one or more entities, wherein each of the one or more entities are modeled as a node. In an embodiment, the method may further comprise assigning a weight to each node, wherein the weight is indicative of criticality associated with the one or more entities and the at least one issue. In an embodiment, the method may further comprise automatically prioritizing one or more issues from the prioritized list of registered tickets for automating resolution based on the one or more criteria.

In another aspect, a system for prioritizing and planning issues for automation is provided. The system comprises a memory storing programmed instructions, and one or more technology-specific service catalogs; one or more communication interfaces; one or more hardware processors coupled to a memory using the one or more communication interfaces, wherein the one or more hardware processors are configured by the programmed instructions to: obtain one or more registered tickets comprising ticket description pertaining to one or more issues, map the ticket description of the one or more registered tickets to one or more corresponding entries being present in the one or more technology-specific service catalogs stored in the memory, determine at least one of one or more composite matches and one or more ambiguous matches by performing a comparison of (i) one or more clauses in the ticket description from one or more registered tickets and (ii) the one or more corresponding entries stored in the one or more technology-specific service catalogs, identify at least a subset of the one or more registered tickets for day-zero automation resolution based on the one or more composite matches, compute a match score for each registered ticket that pertains to the one or more ambiguous matches to obtain a set of ambiguously registered tickets, wherein the match score is computed based number of clauses from the ticket description in the set of ambiguously registered ticket being ambiguously matched with the one or more corresponding entries stored in the one or more technology-specific service catalogs, and compute a priority score for each issue in the set of ambiguously registered tickets by performing an analysis on each the issue in the set of ambiguously registered tickets based on one or more criteria comprising cost, effort benefit, quality benefit, and risk to automatically prioritize one or more issues from the set of ambiguously registered tickets.

In an embodiment, the one or more hardware processors are further configured by the programmed instructions to automatically generate a prioritized list of registered tickets from the set of ambiguously registered tickets based on the priority score.

In an embodiment, the step of performing an analysis is preceded by generating one or more issue blueprints for one or more issues in a ticket description associated with the set of ambiguously registered tickets, wherein the one or more generated issue blueprints comprise at least one of an operational graph comprising at least one issue to be resolved, one or more entities associated with the at least one issue and a relationship across the one or more entities, and wherein each of the one or more entities are modeled as a node. In an embodiment, the one or more hardware processors are further configured by the programmed instructions to assign a weight to each node, wherein the weight is indicative of criticality associated with the one or more entities and the at least one issue. In an embodiment, the one or more hardware processors are further configured by the programmed instructions automatically prioritizing one or more issues from the prioritized list of registered tickets for automating resolution based on the one or more criteria.

In yet another aspect, one or more non-transitory machine readable information storage mediums comprising one or more instructions is provided. The one or more instructions which when executed by one or more hardware processors causes: obtaining one or more registered tickets comprising ticket description pertaining to one or more issues; mapping the ticket description of the one or more registered tickets to one or more corresponding entries being present in one or more technology-specific service catalogs stored in a memory. In an embodiment, the step of mapping the ticket description of the one or more registered tickets is preceded by removing at least one of one or more stop words, and one or more expressions from the ticket description. The instructions may further cause determining, by the one or more hardware processors, at least one of one or more composite matches and one or more ambiguous matches by performing a comparison of (i) one or more clauses in the ticket description from one or more registered tickets and (ii) the one or more corresponding entries stored in the one or more technology-specific service catalogs; identifying, by the one or more hardware processors, at least a subset of the one or more registered tickets for day-zero automation resolution based on the one or more composite matches; computing, by the one or more hardware processors, a match score for each registered ticket that pertains to the one or more ambiguous matches to obtain a set of ambiguously registered tickets, wherein the match score is computed based number of clauses from the ticket description in the set of ambiguously registered ticket being ambiguously matched with the one or more corresponding entries stored in the one or more technology-specific service catalogs; and computing, by the one or more hardware processors, a priority score for each issue in the set of ambiguously registered tickets based on an analysis being performed on each the issue in the set of ambiguously registered tickets based on one or more criteria comprising cost, effort benefit, quality benefit, and risk to automatically prioritize one or more issues from the set of ambiguously registered tickets. In an embodiment, the step of performing an analysis is preceded by generating one or more issue blueprints for one or more issues in a ticket description associated with the set of ambiguously registered tickets. In an embodiment, the instructions may further cause the one or more hardware processors to automatically generate a prioritized list of registered tickets from the set of ambiguously registered tickets based on the priority score.

In an embodiment, the one or more generated issue blueprints may comprise at least one of an operational graph comprising at least one issue to be resolved, one or more entities associated with the at least one issue and a relationship across the one or more entities, wherein each of the one or more entities are modeled as a node. In an embodiment, the instructions may further cause assigning a weight to each node, wherein the weight is indicative of criticality associated with the one or more entities and the at least one issue. In an embodiment, the method may further comprise automatically prioritizing one or more issues from the prioritized list of registered tickets for automating resolution based on the one or more criteria.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

Figure 1 is an exemplary block diagram of a system for prioritizing and planning issues in automation according to an embodiment of the present disclosure.

Figure 2 is a flow diagram illustrating a processor implemented method for prioritizing and planning issues in automation using the system of Figure 1 according to an embodiment of the present disclosure.

Figure 3 illustrates an overall flow of execution of the system and method for prioritizing and planning issues in automation, in accordance with an embodiment of the present disclosure.

Figure 4(a) illustrates an example of the service catalog, in accordance with an embodiment of the present disclosure.

Figure 4(b) illustrates an example of ticket descriptions that match to the service catalog entry, in accordance with an embodiment of the present disclosure.

Figure 5 illustrates an exemplary operation graph for an issue, in accordance with an embodiment of the present disclosure.

Figure 6 illustrates calculation of score of the issue, in accordance with an exemplary embodiment of the present disclosure.

Figure 7 illustrates a table with issues prioritized for automation, in accordance with an exemplary embodiment of the present disclosure.

Figure 8 illustrates an exemplary operations graph an issue MQRC Q FULL, in accordance with an embodiment of the present disclosure.

Figure 9 illustrates an exemplary operations graphs for an Issue MQRC Q SERVICE INTERVAL HIGH, in accordance with an embodiment of the present disclosure.

Figure 10 illustrates an exemplary automation plan for issues, in accordance with an embodiment of the present disclosure.

Figure 11 illustrates an exemplary operations graphs for an Issue Server offline after MS Patching, in accordance with an embodiment of the present disclosure.

Figure 12 illustrates an exemplary automation plan for issues, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

According to an embodiment, a system and method for prioritizing and planning issues in automation is disclosed. More particularly, the system and method for prioritizing and planning issues in automation by evaluating the issues on various aspects of cost, quality, and risk is disclosed.

According to another embodiment, prioritization of issues for automation are provided such that the automation is beneficial, reduces risk, cost and effort. Information retrieval techniques are used along with domain knowledge to compute risk, quality, cost and effort for each issue of the issues, to prioritize the issues. In another embodiment, the system and method provides a systematic plan for automation of the issues and to generate a business case.

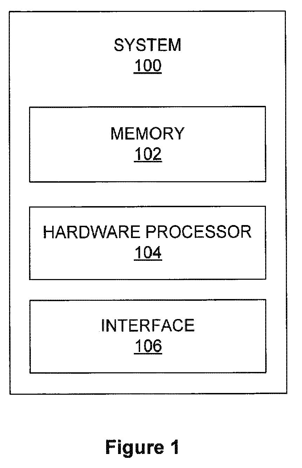

Referring now to the drawings, and more particularly to Figures 1 through 12, where similar reference characters denote corresponding features consistently throughout the figures, there are shown preferred embodiments and these embodiments are described in the context of the following exemplary system and/or method.

Figure 1 is an exemplary block diagram of a system 100 for prioritizing and planning issues in automation according to an embodiment of the present disclosure. The system 100 comprises a memory 102, a hardware processor 104, and an input/output (I/O) interface 106. Although the exemplary block diagram and the associated description refers to a memory, a hardware processor, and an input/output communication interface, it may be understood that one or more memory units, one or more hardware processors, and/or one or more communication interfaces may be comprised in the system 100. The memory 102 may further includes one or more functional modules (not shown in Figure 1). The memory 102, the hardware processor 104, the input/output (I/O) interface 106, and/or the modules may be coupled by a system bus or a similar mechanism.

The memory 102, may store instructions, any number of pieces of information, and data, used by a computer system, for example the system 100 to implement the functions of the system 100. The memory 102 may include for example, volatile memory and/or non-volatile memory. Examples of volatile memory may include, but are not limited to volatile random access memory (RAM). The non-volatile memory may additionally or alternatively comprise an electrically erasable programmable read only memory (EEPROM), flash memory, hard drive, or the like. Some examples of the volatile memory includes, but are not limited to, random access memory, dynamic random access memory, static random access memory, and the like. Some example of the non-volatile memory includes, but are not limited to, hard disks, magnetic tapes, optical disks, programmable read only memory, erasable programmable read only memory, electrically erasable programmable read only memory, flash memory, and the like. The memory 102 may be configured to store information, data, instructions or the like for enabling the system 100 to carry out various functions in accordance with various example embodiments.

Additionally or alternatively, the memory 102 may be configured to store instructions which when executed by the hardware processor 104 causes the system 100 to behave in a manner as described in various embodiments. The memory 102 stores the functional modules and information, for example, information (e.g., one or more registered tickets, one or more technology-specific service catalogs, dictionary words, non-dictionary words, composite matches, ambiguous matches, a set of registered tickets identified for day-zero automation, a set of ambiguously registered tickets, a priority list of registered tickets, issues, ticket descriptions, and the like).

The hardware processor 104 may be implemented as one or more microprocessors, microcomputers, microcontrollers, digital signal processors, central processing units, state machines, logic circuitries, and/or any devices that manipulate signals based on operational instructions. Further, the hardware processor 104 may comprise a multi-core architecture. Among other capabilities, the hardware processor 104 is configured to fetch and execute computer-readable instructions or modules stored in the memory 102. The hardware processor 104 may include circuitry implementing, among others, audio and logic functions associated with the communication. For example, the hardware processor 104 may include, but are not limited to, one or more digital signal processors (DSPs), one or more microprocessor, one or more special-purpose computer chips, one or more field-programmable gate arrays (FPGAs), one or more application-specific integrated circuits (ASICs), one or more computer(s), various analog to digital converters, digital to analog converters, and/or other support circuits.

The hardware processor 104 thus may also include the functionality to encode messages and/or data or information. The hardware processor 104 may include, among others a clock, an arithmetic logic unit (ALU) and logic gates configured to support operation of the hardware processor 104. Further, the hardware processor 104 may include functionality to execute one or more software programs, which may be stored in the memory 102 or otherwise accessible to the hardware processor 104.

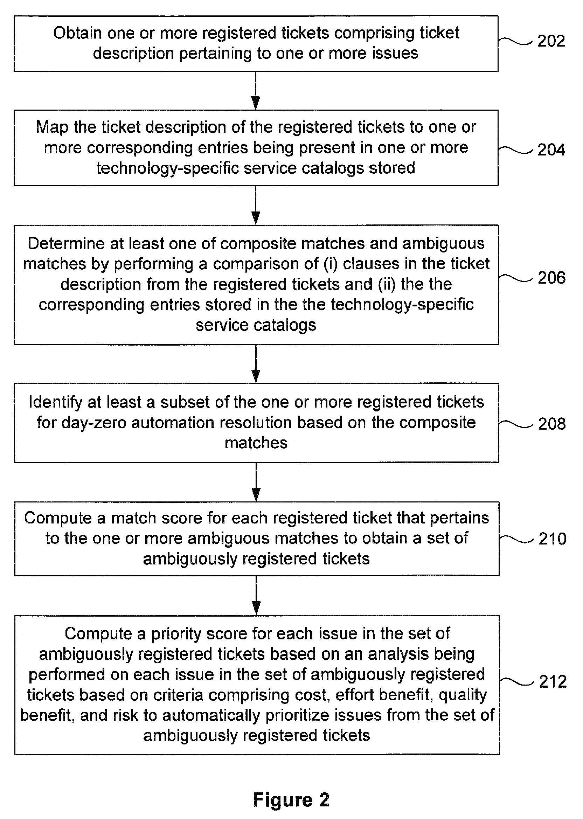

Figure 2, with reference to Figure 1, is a flow diagram illustrating a processor implemented method for prioritizing and planning issues in automation using the system 100 according to an embodiment of the present disclosure. The steps of the method of the present disclosure will now be explained with reference to the components of the system 100 as depicted in FIG. 1. The hardware processor 104 is configured by programmed instructions stored in the memory 102. The hardware processor 104 when configured by the programmed instructions generates one or more lists of prioritized registered tickets as described hereinafter. In an embodiment, at step 202, the hardware processor 104 obtains one or more registered tickets comprising ticket description pertaining to one or more issues. In an embodiment, at step 204, the hardware processor 104 maps the ticket description of the one or more registered tickets to one or more corresponding entries being present in the one or more technology-specific service catalogs stored in the memory 102. In an embodiment, the step 204 is preceded by removing at least one of one or more stop words, and one or more expressions from the ticket description.

In an embodiment, at step 206, the hardware processor 104 determines at least one of one or more composite matches and one or more ambiguous matches by performing a comparison of (i) one or more clauses in the ticket description from the one or more registered tickets and (ii) the one or more corresponding entries present in the one or more technology-specific service catalogs. In an embodiment, at step 208, the hardware processor 104 identifies at least a subset of the one or more registered tickets for day-zero automation resolution based on the one or more composite matches. In an embodiment, at step 210, the hardware processor 104 computes a match score for each registered ticket that pertains to the one or more ambiguous matches to obtain a set of ambiguously registered tickets. In an embodiment, the match score is computed based number of clauses from the ticket description in the set of ambiguously registered ticket being ambiguously matched with the one or more corresponding entries stored in the one or more technology-specific service catalogs.

In an embodiment, at step 210, the hardware processor 104 computes a priority score for each issue in the set of ambiguously registered tickets by performing an analysis on each of the issue in the set of ambiguously registered tickets based on one or more criteria comprising cost, effort benefit, quality benefit, and risk to automatically prioritize one or more issues from the set of ambiguously registered tickets. In an embodiment, the step of performing an analysis is preceded by generating one or more issue blueprints for one or more issues in a ticket description associated with the set of ambiguously registered tickets. In an embodiment, the one or more criteria may be selected for performing analysis on the issues based on the nature and complexity of the ticket description and corresponding registered tickets to be resolved as day zero automation and/or prioritized and planned for resolution of issues in them. This enables effective utilization of resources and infrastructure available at a particular instance. For example, if an issue in a registered ticket is related to a server, then the criteria cost, effort benefit, quality benefit and risk, may be utilized for performing analysis on the issue/ticket based on the nature and complexity of the ticket description and resolution. In another example, if an issue is related to administrative services, then effort benefits, and quality benefits may be utilized for performing analysis on the issue/ticket. The nature and complexity of the ticket description enables the system 100 to intelligently identify and select the one or more criteria comprising, but are not limited to, cost, effort benefit, quality benefit, risk, and the like. The identification and selection of the one or more criteria may also be learnt from the pattern of registered tickets and how they have been resolved (or prioritized and planned for automation and resolution) or taken for day zero automation. In an embodiment, the system 100 may intelligently identify and select the one or more criteria by assigning a weight and prioritize which the one or more criteria for performing analysis on the issues/tickets, wherein the weight may be assigned to the one or more criteria (or to subset of the one or more criteria) based on the nature and complexity of ticket description (or issue(s)) in the registered tickets (or tickets that may be subsequently registered). In an embodiment, the one or more generated issue blueprints comprise at least one of an operational graph comprising at least one issue to be resolved, one or more entities associated with the at least one issue and a relationship across the one or more entities, wherein each of the one or more entities is modeled as a node. In an embodiment, the method further includes assigning a weight to each node, wherein the weight is indicative of criticality associated with the one or more entities and the at least one issue.

In an embodiment, the hardware processor 104 further automatically generates a prioritized list of registered tickets from the set of ambiguously registered tickets based on the priority score. In an embodiment, the hardware processor 104 automatically prioritizes one or more issues from the prioritized list of registered tickets for automating resolution based on the one or more criteria. In an embodiment, when the one or more issues the prioritized list of registered tickets are attended for resolution, next time, for a similar (and/or identical) set of issues or near similar set of issues, the system 100 may perform comparison of the text description of these similar (and/or identical) set of issues or near similar set of issues and obtain (i) composite matches for day-zero automation of resolution and/or (ii) ambiguous matches for generating prioritized list of registered tickets for automation and resolution. This enables the system 100 to learn from the automation of resolution and day-zero automation pattern, store the learnt pattern in the memory 102, and apply the learnings on subsequent registered tickets pertaining to similar scenarios, or near similar scenarios. This enables the system 100 to perform day-zero automation and plan and prioritize issues much faster in a seamless manner. Based on the learnings, and the process followed by the system 100, one or more service catalogs (e.g., technology-specific service catalog) may continually updated.

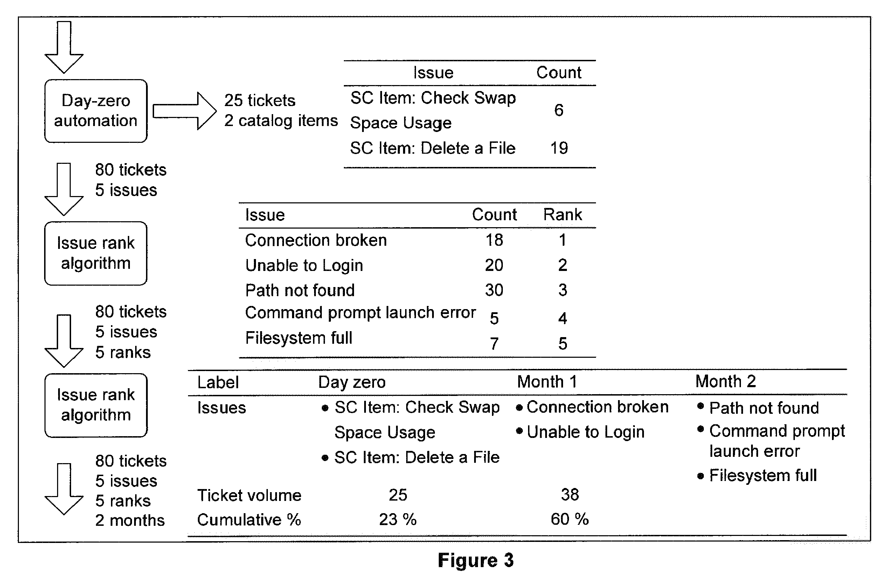

According to an embodiment, referring to figures 3, the system and method for prioritizing and planning issues in automation is described. The system and method systematically analyzes the issues observed in an enterprise IT system, wherein the issues may be related to various aspects. Further, the issues that are best suited for automation are identified, and a plan for automation prioritization of the issues is presented. There are shown preferred embodiments and these embodiments are described in the context of the following exemplary system and/or method.

According to an embodiment, in order to prioritize the issues related to automation, the system and method may use one or more data sources commonly available in an enterprise IT system. The one or more data sources may comprise tickets logs, configuration database, service catalog and the like. Organizations use ticketing tools to log various issues observed in the system and service requests raised by the users. These issues are logged in the form of tickets and contain rich source of information such as time of occurrence, a ticket description, an affected inventory item, a resolver name, resolution steps performed, resolution time and the like.

The configuration database is described herein. Organizations maintain a configuration management database (CMDB) that contains details of IT inventory of applications and infrastructure components. The CMDB may also maintain criticality of different system components with respect to served business functions. The service catalog is described herein. Service providers maintain a catalog of technology-specific issues that are commonly observed across organizations. These technology-specific issues provide a unified view of all the issues that are potential candidates for automation. Service providers often maintain additional details for each issues such as how much automation is possible in an issue, how much effort is required for automation, and the like in the service catalog.

The system and method discloses an approach to evaluate a day-zero automation potential. The approach is developed by presenting a technique to map ticket logs of the issues to the service catalog. The service catalog provides a list of issues for which an automation script is already present with a service provider. By mapping tickets to the service catalog, the issues that can be potentially automated on day-zero are identified. An approach to build a comprehensive blueprint of each issue in the form of an operations graph is disclosed. The operations graph may be built by mining various operational logs. The operations graph may capture various properties of the issues and related IT components. A technique to analyze the blueprint of each issue and evaluate the issue on various aspects of cost, quality, and risk is disclosed. Finally, a method is presented to make a systematic plan for automation of the issues and generate a business case of the automation of the issues.

According to an embodiment of the present disclosure, referring to a figure 3, the system and method for prioritization of the issues related to automation is described. Referring to figure 3, a day zero automation step is described. A sample data of 105 tickets is used as an input to the system. Figure 3 shows an overall flow of execution of the present system and method by way of example. In one example, 105 tickets data is analyzed. 25 of 105 tickets map to 2 entries in the service catalog, thus becomes candidates for day-zero automation. The remaining 80 tickets are from 5 distinct issues. The issues from 80 tickets are prioritized using the issue rank technique of the present disclosure. Finally, a plan for automation by prioritizing the right issues is also disclosed.

In a first step, in order to prioritize the issues, day zero automation may be carried out. According to an embodiment, the day zero automation is described. Day zero automation, in an embodiment of the present disclosure refers to cleaning ticket description, mapping the cleaned ticket description to action and object keyword of service catalog entry and finding best (or optional) match (or composite match) for that registered ticket for resolution. In many IT environments the issues observed are common across organizations. This is specifically true in IT infrastructure towers such as databases, operating systems, middleware, and the like. In such environments, automation scripts developed once are usually applicable across many organizations. A catalog of existing automation capabilities is maintained in the form of technology-specific service catalog. In any new environment, initially the issues covered by the service catalog may be identified. Identification of the issues covered by the service catalog provides a day-zero automation coverage. An approach to estimate day-zero automation potential is also disclosed. An essential step for day-zero automation is to map tickets data to the service catalog. Ticket data contains various fields such as a creation time, a system of origin, severity of a problem, and various problem related attributes such as a category, a type, an item and a description of the problem. When the fields such as the category, the type, and the item are structured and finite, the fields summary or description are semi-structured or unstructured. On the other hand, entries in the service catalog are well-defined, finite, and structured. For instance, a file deletion request has a service catalog entry 'Delete a File'.

However, users may describe the issues in different ways such as 'Please delete file from M drive', 'Requesting help in removing the public file', 'erase the file to make more space', 'cut the file' and the like. Since there is heterogeneity in description of the issues, various techniques are used to correctly map a ticket description to the relevant service catalog entry, when applicable. Following are the techniques used to remove heterogeneity in description of the issues and bring in the standardization of the issues from ticket data. In one technique, while matching the English dictionary words, instead of matching the word alone, dictionary synonyms of the English dictionary words may also be matched.

Matching with the dictionary synonyms ensures that the word 'delete' is mapped to synonyms of the word 'delete' such as remove and erase.

In another technique, in some scenarios, some technology-specific terms are used interchangeably. Use of technology-specific synonyms ensure that the terms 'delete file' and 'cut file' are mapped interchangeably. Another example is where 'restart a server' and 'jump a server' are used interchangeably. Further, another technique known as 'stemming' may be used in mapping of the tickets data, wherein a word is used in various derived forms. For instance, the term 'delete' is used as 'deleted', 'deleting', 'deletes' and the like. In one example, Porter's stemming algorithm may be used to reduce each word to base form of the word.

In another embodiment, mapping of the tickets data to the service catalog using above mentioned techniques is described below. Preparation of ticket description is explained in detail. In preparation of the ticket description, unwanted information from the ticket description may be removed and cleaning text of the ticket description to make the text easy to match. By way of an example, an issue is described below.

*PATROLALARM 25/02/2015 06:46 Stopping the ORACLE filewatcher /oral*

Further, one or more steps performed to clean the description comprises, remove stop words such as articles, numbers, punctuations, and the like. In the example, removing the stop words and transforming the ticket description makes the ticket description as shown below.

*PATROLALARM Stopping ORACLE filewatcher /oral*

The next step further comprises retaining dictionary words. A description often contains information other than the issue details, not important while performing a match with the service catalog, and may mislead the matching process. Hence, as a next step of cleaning process, the non-dictionary words such as timestamp, thresholds, name of specific applications or servers facing the issues and the like may be removed. After removing non-dictionary words the ticket description is transformed as follows:

*Stopping*

In the next step, technology-specific non-dictionary words may be retained. Some issues are best explained by technology-specific words that are not valid dictionary words. Thus, as an exception to the above step, valid technology-specific non-dictionary words are retained. In the above example, the words *ORACLE* and *filewatcher* are retained as they are important for explaining the issue. Thus the ticket description is transformed as follows:

*Stopping ORACLE filewatcher*

By performing stemming, the retained dictionary words may be transformed to the root of the retained words is shown as below.

*Stop ORACLE filewatcher*

In the next step, preparation of a service catalog is described. Unlike the ticket descriptions, the service catalog is well defined, finite, and structured. However, to best match the service catalog with tickets descriptions, following preparation steps are performed. Following is an example of service catalogue entry as used.

*Stopping Oracle filewatcher services*

The next step in preparation of the service catalogue entry may be defining of keywords. The service catalog entry often refers to an action and an object. The service catalogue entry may be separated out into an action and an object keywords. In the present example, the action and the object are separated as follows:

Action = *stopping*
Object = *Oracle filewatcher services*

In a next step to defining keywords, the entry may be enriched with synonyms. As explained in the above section, the action and the object keywords may be enriched with synonyms. For instance, for the service catalog entry *Stop frlewatcher service,* the service entry is enriched with the keywords as follows:

*Action = stopping, terminating, ending*
*Object - Oracle filewatcher services, Oracle filewatcher professes*

Further stemming on the keywords may be performed and the root words may be retained. In the example, the entries are updated as follows:

*Action = stop, terminat, end*
*Object = Oracle filewatcher servic, Oracle filewatcher proces*

After preparing the keywords, matching rules may be defined for each entry in the service catalog in the form of AND, OR rules. The clauses for the AND rules define the information that must be present in the ticket description to match to the catalog entry. The OR clauses refer to the alternate choices within the AND clauses. For the present example, the rule can be defined as:

*(stop OR terminat OR end) AND Oracle AND filewatcher AND (servic OR process)*

After defining the matching rules, matching between the service catalog and the ticket descriptions may be performed. A prepared ticket description and a prepared service catalog entry may be provided to a matching technique. The matching technique may comprise, but is not limited to, identifying distinct clauses that are separated by AND rule. For example following are the distinct clauses identified for above said entry.

*1) (stop OR terminat OR end)*
*2) Oracle*
*3) filewatcher*
*4) (servic OR process)*

The matching technique may further comprise, but is not limited to, searching for a match of each distinct clause, wherein the distinct clause is considered as the match if any one of the OR clauses are present.

*1) Match: (stop OR terminat OR end) = stop*
*2) Match: Oracle = Oracle*
*3) Match: filewatcher = filewatcher*
*4) No Match: (servic OR process)*

Further, the match may be scored based on number of clauses matched. Score = 3/4 = 0.75. In an exemplary embodiment, different types of the matches with the service catalog are disclosed below. For example, a composite match is explained. In the composite match, when a ticket description is too generic or the service catalog is very detailed, then one ticket refers to multiple service catalog entries. Another match with the service catalogue is an ambiguous match. When a ticket description is ambiguously written and is difficult to clearly map, then that match refers to the ambiguous match.

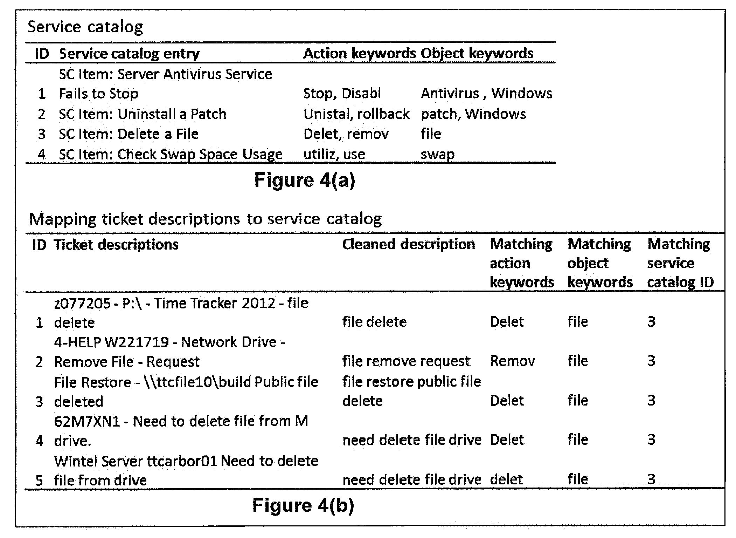

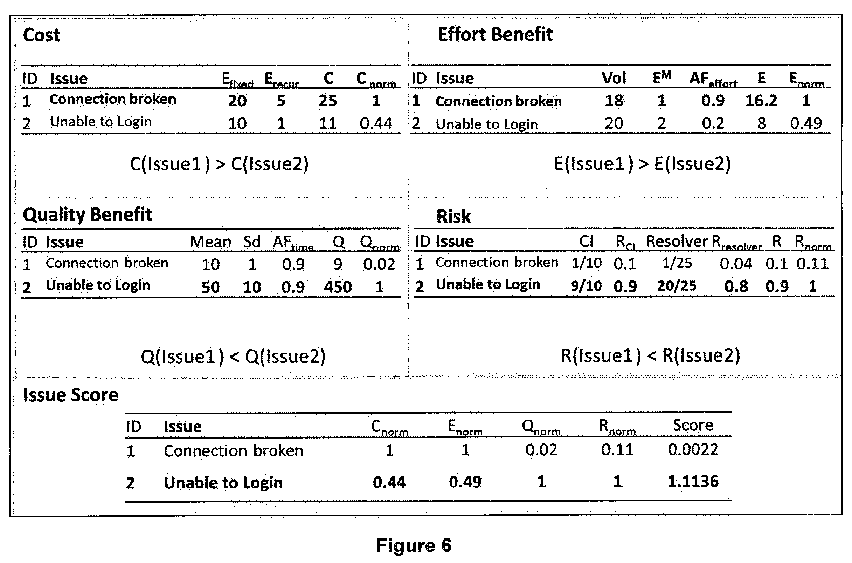

Referring to Figure 4(a), an example of the service catalog is shown. Figure 4(b) shows an example of the ticket descriptions that match to the service catalog entry 'Delete a File'. Referring to figure 4(b), 6 tickets are mapped to SC Item: Server Antivirus Service Fails to Stop and 19 tickets map to SC Item: Delete a File. The 25 tickets (19 + 6) can be automated on day-zero. After identifying the issues for day-zero automation, next the remaining issues are analyzed for identifying and prioritizing the issues suitable for automation. Initially issue may be extracted on the ticket descriptions and then an issue blueprint may be constructed in the form of an operations graph. Further, this operations graph may be analyzed to score each issue for automation.

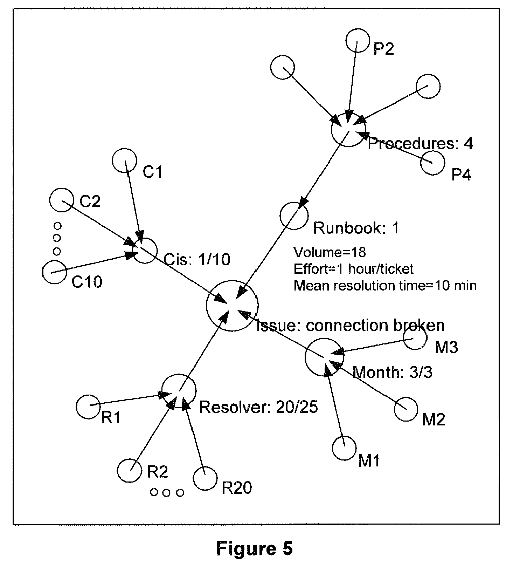

According to an embodiment, referring to Figure 5, the operation graph is explained. The issues may be modeled in the form of an operations graph. The operations graph may be a directed acyclic graph (DAG). Each issue and various entities associated with the issues are modeled in a plurality of nodes such as resolvers, users, inventory items, and the like. Each node may be associated with static and dynamic attributes. The edges of the nodes represent inter-relationships across the entities. CMDB data and tickets data may be used to construct the operations graph. The CMDB database may provide information about various inventory items, inter-dependencies of the inventory items, and criticality of the inventory items. The tickets database (stored in the memory 102) may provide information about observed issues, the inventory items where the issue is observed, the resolvers that resolved the issue, a time-stamp, a severity, and various other attributes. Following are examples of the entities so modeled.

One of the entities is an issue. Each issue that is a potential candidate for automation may be modeled as a node. The issue nodes may form pivot elements of the graph. The nodes may be connected to various other nodes based on the properties of the nodes. Each issue may be associated with various attributes such as monthly volume, efforts, mean time to resolve, and the like.

Another entity is a resolver. Each resolver may be modeled as another node. A resolver is associated with a weight based on attributes such as a seniority and an expertise. If a resolver *r* resolves *k* tickets of *issue i,* then an edge from the resolver *r* may model to the issue *i.* The edge is assigned a weight *k.* Configuration item (CI) may be another entity. Each configuration item which refers to hardware and software component(s) of an inventory on which the issue is raised may be modeled as a node. For example, in case of Oracle system, database instances, table spaces, data file, may be modeled as nodes. The weight of the nodes indicate a criticality of the item. For instance, the database instances serving business-critical applications may be (or are) assigned higher weight. An edge from an inventory item *v* to an issue i may indicate that one or more tickets are raised regarding the issue i at inventory item v. The edge weight may indicate the number of tickets raised.

Month is another entity described herein. Individual months may be modeled as nodes and edges may be constructed between a month and an issue based on the number of monthly tickets observed for the issue. Runbook is another entity described herein. Fix logs used by the issues in the form of runbooks and procedures may be modeled.

Figure 5 shows an exemplary operations graph for the Issue 'Connection broken'. The issue 'Connection broken' is modeled across dimensions of resolver, CIs, months, and runbooks. The issue is served by 20 of 25 resolvers, originates at only 1 of 10 CIs, occurs in 3 months, and is resolved using one runbook consisting of 4 procedures. The model may also capture various attributes of an issue such as volume (18 tickets), effort (1 hour per ticket), and the like. After modeling each issue on various properties, a technique to prioritize issues for automation is disclosed. The technique to prioritize issues for automation may be developed by considering various cost and benefit aspects involved in automation. In the prior art simple techniques have been used for identifying automation candidates. For example, issues that occur maximum number of times, or issues occurring from business critical applications are automated on priority. However, the automation of the issues so identified often do not lead to significant benefits with respect to reduction in operational cost or improvement in quality of service. This is usually the case because volume and business-criticality are only few aspects of this larger problem space. Various other aspects need to be considered. For instance, some issues involve very high cost of automation due to complex workflows and recurring changes. Some issues are only partially automatable and thus cannot completely eliminate manual resolution. Problem of automation prioritization of issues requires analysis of multiple dimensions such as cost, benefit, and risk. Furthermore, some of these dimensions are often mutually conflicting. Following are few ideas on how the dimensions can be evaluated.

Cost Automation involves a considerable cost. The cost of automation of the issue can be calculated in terms of time taken to automate and the amount of effort spent on automation of the issue. Various factors need to be considered while computing the cost of an automation. Ambiguity is another aspect of the issue. Manual resolution of the issue may be done by following a runbook that details out the resolution steps. The quality of the runbook varies across organizations. Furthermore, in some cases, the resolution steps are not well articulated and stay as tacit knowledge with experts. A prerequisite for automation is unambiguous articulation of the resolution. More the ambiguity, higher is the cost to define the resolution procedure.

Complexity is another cost affecting factor for automation. The complexity of automation of issue resolution varies across issues. Resolution of some issues involves some straight-forward automation of a few basic steps. While resolution of some other issues might need automation of a complex workflow. Cost of an automation should consider aspects such as number of actions in the resolution procedure, human effort required for automation, which steps can be built on preexisting automation scripts. Further, in case of some issues, automation is not a one-time task. The automation script needs to be constantly updated to cater to system upgrades, change in business logic, change in compliance policies, and the like. The recurring cost of automation should also be considered. The cost of automation of an issue i may be calculated as follows:

$$C(i) = E_{prep} + E_{fixed} + E_{recurring} \quad ...........(1)$$

$E_{prep}$ refers to the cost to disambiguate the resolution steps, $E_{fixeed}$ is the number of hours required for first time automation, $E_{recurring}$ is hours spent as a part of recurring upgrades to the automation scripts. Another reduction in automation cost is effort benefit. A direct benefit of automation is reduction in manual effort which eventually leads to reduction in cost of operations. The benefits of effort reduction may be calculated as follows. Initially current manual effort spent in issue resolution are calculated. Current Manual *effort* $C^M(i)$ is a function of volume of tickets $V_i$ and time spent $E^M$ in resolving each ticket.

$$C^M_{(i)} = V_i * E^M \quad .............(2)$$

Further, reduction in cost through automation may be calculated. In some scenarios, resolution of an issue cannot be completely automated. For instance, there exists cases where resolution requires an expert intervention or a resolution has to go through an approval and a manual verification cycle. In such cases, only partial automation can be supported. The benefit of effort reduction $E(i)$ that can be obtained from automation of an issue $i$ may be derived as follows:

$$E(i) = C^M(i) * AF_{effort}(i) \ldots\ldots (3)$$

$AF_{effort}(i)$ refers to an automation factor of the issue and indicates the fraction of the resolution effort that can be automated. Further, a quality benefit may also be evaluated. In manual resolution, the resolution time of an issue differs from resolver to resolver based on their expertise and the processes they follow. Automation yields direct benefits in improving the resolution time. Resolution time of an issue gets substantially reduced by automation. The variations in the resolution time also reduces significantly after automation. Given the time-series of the resolution time, $(RT_i)$ of history of tickets observing Issue $i$, quality improvement by automation of an issue $i$, may be computed as followed.

Initially reduction in resolution time may be calculated. The mean resolution time of manual resolution of the issue $i$ as $\mu(RT_i)$ may be calculated. Further the reduction in resolution time due to automation as $\mu(RT_i) * AF_{time}(i)$ is calculated, where $AF_{time}(i)$ refers to the automation factor of the issue $i$ and indicates the fraction of the resolution effort that can be automated. Further, a reduction in variations may be calculated. The variations in resolution time may be captured by calculating the standard deviation of resolution time of manual resolution of the Issue i as $\sigma(RT_i)$. Given these two terms, the quality improvement by automation of issue i may be calculated as follows:

$$Q(i) = \mu(RT_i) * AF_{time}(i) * \sigma(RT_i) \ldots\ldots (4)$$

Further, risk is another factor that may be considered while prioritizing issues for automation is the business criticality of the issues. Following ways may be used to assess an issue with respect to business risk. The issues originating from system components serving business-critical applications should be prioritized for automation. The risk of issues with respect to the business criticality may be computed by analyzing the business criticality of the system components that raise the issue as follows:

$$R_{CI}(i) = \frac{\sum_{\forall c \in CI_i} W(c)}{\sum_{\forall c \in CI_{all}} W(c)} \ldots\ldots\ldots\ldots (5)$$

In equation (5), $CI_i$ refers to the CIs that observe issue $i$, $CI_{all}$ refers to all the CIs in inventory serving the given technology under consideration, and $W(c)$ indicates the business criticality of the CI c.

Further, service level agreement (SLA) risks associated with issues are described. The issues are associated with Service Level Agreement (SLA) with respect to the resolution time of the issues. The issues observing cases of a poor manual resolution lead to abnormal delays and SLA violations form important candidates for automation. The term $R_{SLA}(i)$ may be computed as a fraction of the tickets of Issue $i$ observing SLA violations.

Further, resolver risks associated with issues are described. An issue whose resolution is known to a few resolvers poses a risk of the resolvers being single point of failure or performance bottlenecks. The risk of an issue with respect to the resolver risks aspect may be computed by computing fraction of all the resolvers that hold expertise in the issue.

$$R_{resolver}(i) = 1 - \frac{|Resolver_i|}{|Resolver_{all}|} \ldots\ldots\ldots (6)$$

In equation (6), |Resolveri| refers to the number of resolvers that hold expertise in resolving Issue i, and |Resolver_all| refers to all the resolvers serving the given technology under consideration. The risk of an issue i by considering above aspects may be computed as follows:

$$R(i) = max(R_{CI}(i), R_{resolver}(i), R_{SLA}(i)) \ldots\ldots\ldots (7)$$

The issues observed in an enterprise system are often very dynamic. Some issues are very short-lived. The issues appear for a short duration of time either due to system upgrades or maintenance and then do not occur after a patch deployment. Such issues are not good candidates for automation. Similarly, issues with sporadic occurrence or a decreasing trend of occurrences should not be considered for automation. The relevance of an issue i for automation may be computed by considering trend $T(i)$, persistence $P(i)$, and recency $R(i)$ of the issue i. Preference may be given to increasing trend, persistent, and recent issues. The issues with low relevance score may not be considered for automation. The relevance score L(i) of the issue i may be computed as follows:

$$L(i) = Average(T(i),\ P(i),\ R(i))\ldots\ldots\ldots\ldots (8)$$

After computing the relevance score $L(i)$, issue prioritization score may be derived. After removing the issues with low relevance score, the remaining issues may be prioritized for automation. The score of an issue $i$ indicating a priority of the issue for automation, $Score(i)$, is computed as follows in equation (9).

$$Score(i) = \frac{E(i)* Q(i)*R(i)}{C(i)}\ldots\ldots\ldots\ldots(9)$$

The score of the issue is directly proportional to (a) the benefits of effort reduction, $E(i)$ and (b) the improvement in quality, $Q(i)$, and (c) the risk of issue, $R(i)$. On the other hand, the score is inversely proportional to the cost of automation, $C(i)$.

Referring to figure 6, an example of calculation of score of the issue is explained. More particularly, Figure 6 depicts a service catalog and matching (or mapping) ticket description to the service catalog. Referring to figure 6, presently disclosed aspects are demonstrated using working example that compares two issues Issue 1: 'Connection broken' and Issue 2: 'Unable to login'. The disclosure also presents, how the two issues have different properties giving the two issues different scores on different dimensions. In cost aspect, Issue 1 has a higher cost of automation requiring a fixed cost of 20 hours and a recurring cost of 5 hours. The cost is captured in a normalized cost score $C_{norm}$ giving a score of 1 to Issue 1 and 0.44 to Issue 2. Further, in effort benefit aspect, more manual efforts are spent on resolving Issue 1. Hence, Issue 1 also has higher benefits of effort reduction. Further, in present example, for an average volume of 18 tickets and resolvers on an average spend 1 hour on each ticket is taken. With 90% automation, Issue 1 can lead to potential effort savings of 16.2 hours as compared to 8 hours saving of Issue 2. This reflects in the normalized effort benefit score $E_{norm}$ assigning a score of 1 to Issue 1 and a score of 0.49 to Issue 2. In quality benefit aspect, Issue 2, however, has higher benefits with respect to quality improvement. Issue 2 has higher mean resolution time and high variation in resolution time. Automation can provide greater quality benefits for Issue 2 as compared to Issue 1. Hence, the normalized quality benefit score $Q_{norm}$ is set to 0.09 for Issue 1 and 1 for Issue 2.

Further, for risk aspect, Issue 2 is also a high-risk issue. Issue 2 originates from 9 out of 10 CIs and is known only to 1 of the 10 resolvers. The risk score R is set to 0.1 for Issue1 and 0.9 for Issue 2. The final score after considering all dimensions gives a higher score of 1.1136 to Issue 2 and a smaller score of 0.0022 to Issue 1.

Based on the limited time and resources available to implement automated resolution procedures, careful planning of automation is pertinent. Methodologies are disclosed to generate an automation plan. While constructing the automation plan, various objectives and constraints need to be considered. The objectives are listed below. For example, one of the objective may be an effort reduction. Commonly, the effort reduction objective may be defined in terms of the person hours spend on manual resolution that must be reduced. Another objective may be issues covered, defined in terms of number of issues that must get automated. Next objective may be tickets covered, refers to percentage of total ticket volume that must get automated. Still another objective may be quality improvement, refers to reduction in resolution time or reduction in variations across resolution of multiple tickets of the same issue. The objectives can be met by setting the right weights to different criteria defined in the disclosed issue rank technique. The issue rank technique may generate ranks to best meet the defined objectives.

Further, exemplary constraints are listed out. Various real-world constraints appear while developing the automation plan. For example, there is a constraint on the total duration to implement automation. While automation can be an ongoing activity, based on resource availability and budget, automation plan is made for a quarter year, half year, full year, and the like. There is a constraint on the number of person-hour available to implement automation. Given these constraints, often not all issues can be automated. Hence, it becomes very important to prioritize the issues and plan them such that the objectives are well met within the given constraints. The issues to be automated first are the ones that map to service catalog items. These are day-zero candidates. Since they have a pre-built automation script, ideally near-zero time is spent on automating them. For the remaining issues, different approaches are disclosed to plan out automation.

First approach comprises 'Constraint on per-week person-hours', wherein the constraint is placed on per-week person-hours available to develop automation scripts. Based on the ranks derived from the issue rank algorithm, construction of a plan can be straightforward as listed below. Initially time required to automate each issue may be computed. If $Effort_i$ refers to person-hours effort required to automate an issue, and $Effort$ refers to total available per-week person hours effort, then time $Time_i$ required to automate issue $i$ can be calculated as

$$Time_i = \frac{Effort_i}{Effort}\ldots\ldots\ldots(10)$$

In equation 10, $Time_i$ refers to automation time in weeks. Further, the issues for automation may be scheduled sequentially based on the rank of the issues. After scheduling the issues based on ranks, end time of automation of each issue may be computed. For an issue $i$, the end time for automation $EndTime_i$ can be computed by simply a cumulative sum of automation time of all past issues and own automation time each issue.

$$EndTime_i = \sum\nolimits_{\forall j: IssueRank(j) \leq IssueRank(i)} Time_j \ldots\ldots\ldots(11)$$

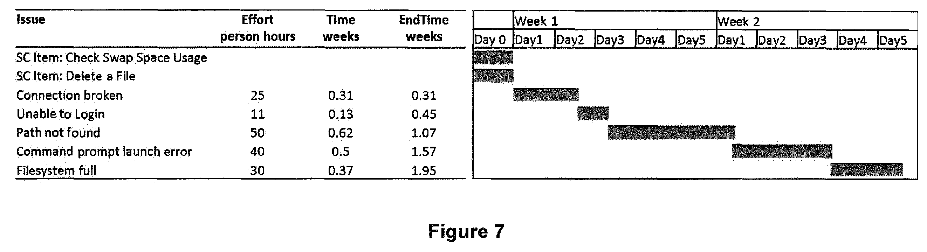

After prioritizing and scheduling of the issues, computation of an automation plan of the issues may be illustrated using another working example. Referring to Figure 7, a table with issues prioritized for automation is shown. More particularly, Figure 7 depicts effort, time, and end time for automation and the automation timeline. The first two issues are mapped to the service catalog and thus require near-zero time to get automated. Hence the time of automation is given as 'day-zero'. The issue with highest priority "Connection broken" requires 20 hours for building automation script. Per-week person-hours available are assumed as 80 (for instance 2 people working 40 hours a week). As a result, this issue requires 0:3125 weeks to get automated. The issue being the first issue, automation starts in the beginning of Week 1 and finishes at 0.3125 weeks. Similarly, the next issue "Unable to Login" requires 0.1375 weeks to get automated. The automation of second issue starts after the end of automation of the previous issue. As a result, the automation of second issue finishes at the end of 0:3125 + 0:1375 = 0:45 weeks, a cumulative sum of time required for automation of all earlier issues. The automation of next issue "Path not found" finishes in 1.075 weeks. As a result, the automation of "Path not found" issue, spills over in the Week 2. Automation of rest of the issues may also be planned in similar manner. The first two issues get automated in the Week 1 and the last three get automated in the Week 2.

A simplistic case of automation planner is also presented. The proposed automation planner gets more complex by considering various other aspects. For example, issues are automated sequentially. In practice automation of multiple issues may also take place in parallel. Furthermore, in the above example, it may be assumed that the issue can be automated at any degree of parallelism. Many issues need to be automated sequentially and presence of multiple resolvers doesn't always reduce the time for automation. Thus, the degree of parallelism needs to be considered. Effectiveness of the proposed concepts are demonstrated through real-world case-studies. In Case study 1 - Automation prioritization executed in batch systems. Analysis of batch system of a leading financial bank is presented. Tickets from one of the business processes are analyzed. The tickets data consisted of 30,599 tickets from 3,564 jobs in 5 months. The tickets were resolved by a team of 30 resolvers. A careful analysis of the tickets indicated that the tickets are referred to 120 unique issues. In first step, day-zero automation, candidates for day-zero automation are identified by mapping issues with items in a service catalog. The service catalog consisted of 36 entries. A majority of tickets mapped to two catalog items viz. MAXRUNALARM and MINRUNALARM. These two items covered a volume of 10,164 tickets and manual effort of 366,155 hours. In second step, operations graph and issue rank algorithm are generated. After the 2 issues that mapped to the service catalog, the remaining 118 issues are modeled in the form of operations graph. The issues are modeled on the various dimensions such as months in which the issue occurred, resolvers that resolved the issue, jobs on which the issue occurred, procedures in the runbook used for resolution, resolution time, cost of automation, and resolution effort. The operations graph of the issues is then analyzed to prioritize using the issue ranking technique. In third step, transient issues are identified. In the present case, 24 issues are transient occurring for less than 15 days. The transient issues are excluded from automation plan and hence not considered for prioritization.

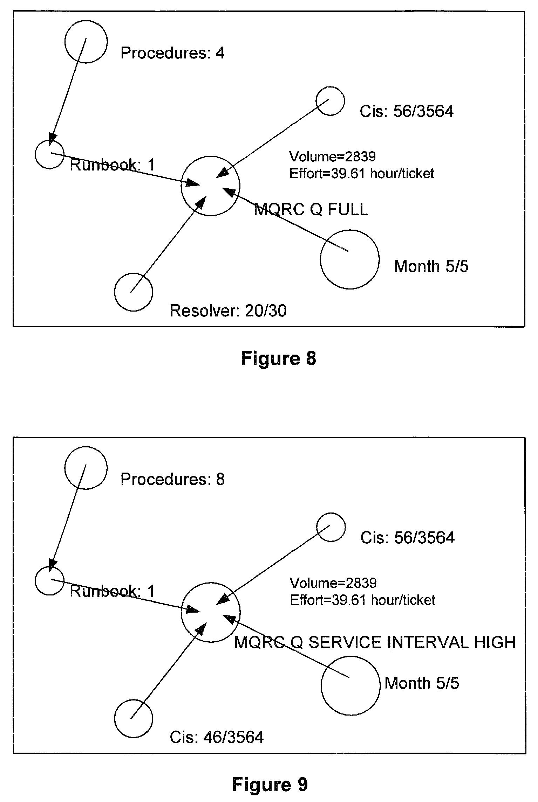

In fourth step, issue rank algorithm is executed. Remaining 94 issues are ranked for prioritization by using the issue rank algorithm. Two issues in the present case are very different in the properties. The issue rank algorithm captures the properties of the issues and assigns appropriate priorities for automation. Consider example of an issue MQRC Q FULL, operations graph for the issue MQRC Q FULL is shown in Figure 8. The issue MQRC Q FULL has a high priority score due to benefit in effort reduction. For effort benefit, the issue occurred 2,839 times in 5 months and requires 39.6 manual hours for resolution for each ticket. The runbook is fairly simple and the runbook automation factor is 0.9. This results in benefit of 101,182 hours. Of all the issues, the issue MQRC Q FULL issue has maximum effort benefit. As a result, score by effort benefit of the issue is 1, cost score is 0.6, quality score is 0.7, and risk score is 0.3 resulting in the highest score of 0.35. Normalized final score of the issue is 1.

Consider another example of an issue MQRC Q SERVICE INTERVAL HIGH as shown in Figure 9. Operations graphs for the Issue MQRC Q SERVICE INTERVAL HIGH is shown in figure 9. The score for the issue (MQRC Q SERVICE INTERVAL HIGH) is high in priority due to the risk the issue carries, the quality of resolution time, and cost of the issue. The issue has occurred 289 times. Risk for the issue is that the issue has occurred on 46 jobs out of 3,564 jobs. As a result, risk score of the issue by CI is low, 0.01. But, resolution of the issue is known to only 9 resolvers out of 30. As a result, the issue has a high risk score due to resolvers, 0.7. As a result, consolidated risk score of the issue is maximum of CI risk and resolver risk, that is, 0.7. Quality of the issue, quality score is high, 0.8. The mean and standard deviation of the resolution time of the issue is 43 hours and 18 hours, respectively. Hence, the quality of the tissue results in 2.4 quality score which after normalization becomes 0.8. The score by effort reduction benefit for the issue is 0.12 and cost score is 0.1. Higher the cost score lower the priority since automation of the issue involves large cost. The final normalized score of the present issue is 0.7.

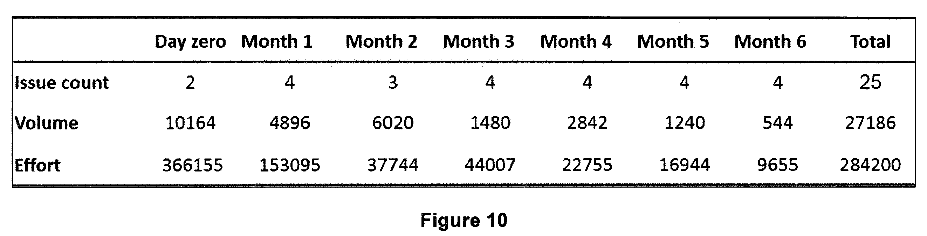

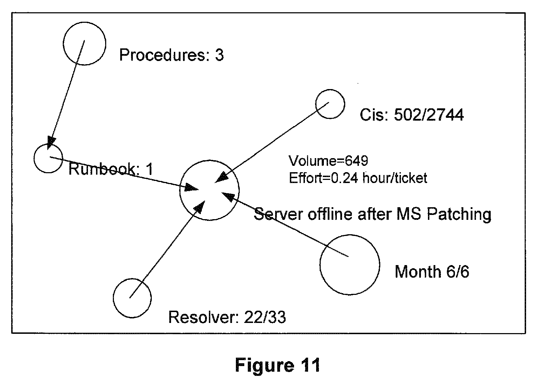

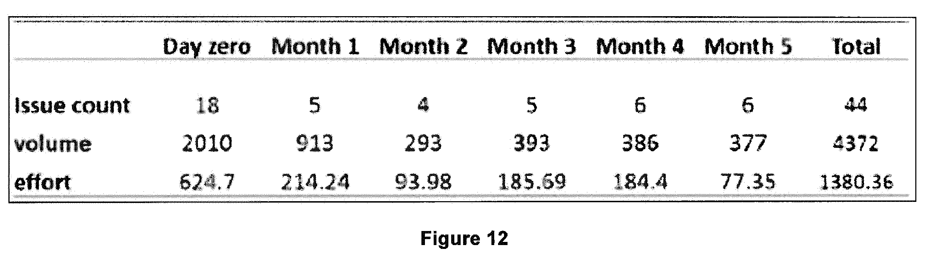

Further, the automation of the present issue is required to be completed within 6 months, and 2 people are assigned for automation of the considered business stream. All issues cannot be automated due to constraint on time within which automation is required to be completed. An exemplary automation plan for the issues so presented is shown in Figure 10 (e.g., for Batch). 25 issues could be automated in 6 months, which covered a total 284,200 hours of manual effort out of total 694678 hours, which refers to potential effort reduction of 41%. Further, Case study 2 is also presented for automation prioritization in Windows systems. Tickets history of the Window tower of the IT system of a major retailer in the USA is analyzed. 6 months tickets data consisting of 5068 tickets generated from 2744 Windows entities is analyzed. The tickets are resolved by a team of 33 resolvers. A careful analysis of the tickets indicated that the tickets referred to 64 unique issues. In first step day-zero automation issues are identified. Windows service catalog had 43 entries and only 22 of these entries are fully automatable. Rest are partially automatable. Candidates for day-zero automation are identified by mapping issues with items in service catalog. 18 issues got mapped with service catalog items. This covered 2010 tickets (39.66%) and 624.7 (26.72%) hours of effort. Further, Operations graph generated and issue rank algorithm executed. The remaining 46 issues are modeled with respect to available dimensions as described earlier. The priority scores of the remaining issues are then computed. Consider an example issue 'Server offline after MS Patching' as shown in Figure 11. The issue has a high score of 0.99. The score of the issue is high due to the risk score (0.99) and high score for effort reduction (0.99). The issue occurs 649 times in 6 months and the issue takes average 0.24 manual hours for resolution. The automation factor is 0.8. Hence, the effort gain due to automation is 24.6 hours. For risk aspect, the issue occurs on a large number of entities 502 out of 2744 (18.3%). The cost score of the issue is 0.37, and quality score is 0.02. Regarding automation plan, the automation is required to be completed within 5 months with 4 people assigned for automation. All issues could not be automated due to constraint on the time within which automation is required to be completed. 18 issues got mapped with the service catalog can be automated on day-zero. Figure 12 shows the complete automation plan for 5 months for the issue (e.g., for Windows®). With 4 persons available for automation, 26 issues could be automated in 5 months. The total effort saving due to automation is 1380.35 hours out of total 1503.36 hours of effort that corresponds to 91.8 % of effort reduction.

Comparison of case study 1 is done with case study 2. Though the tickets data for the case study 2 has smaller number of tickets, and smaller effort, the number of resolvers are large. As a result, a larger effort benefit is expected. Windows being a popular operating system, the service catalog is rich and relevant. As a result, large number of issues, 18, are mapped to service catalog items and can be automated on day-zero.

The embodiments of the present disclosure provide systems and methods for prioritizing and planning issues for automation. The registered tickets are obtained by system 100, and the corresponding ticket descriptions comprises one or more issues are mapped to corresponding entries (e.g., object and keywords) in the service catalogs to determine composite matches for day zero automation resolution, and ambiguous matches. The system 100 further computes a match score for each ticket/issue comprising one or more ambiguous match, and a priority score is computed by the system 100 for each issue in the one or more determined ambiguous registered tickets. The priority score is computed by the system 100 by performing analysis on each issue in the set of ambiguously registered tickets (or the one or more determined ambiguous registered tickets) based on one or more criteria comprising cost, effort benefit, quality benefit, and risk to automatically prioritize one or more issues from the set of ambiguously registered tickets. This enables optimizing the utilization of infrastructure and resources (e.g., user involvements, hardware components such as computer systems, servers, memory, processor(s), software components such as application(s), and the like).

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

It is intended that the disclosure and examples be considered as exemplary only, with a true scope and spirit of disclosed embodiments being indicated by the following claims.

**Claims**

1. A processor implemented method, comprising:

    obtaining, by one or more hardware processors, one or more registered tickets comprising ticket description pertaining to one or more issues;
    mapping said ticket description of said one or more registered tickets to one or more corresponding entries being present in one or more technology-specific service catalogs stored in a memory;
    determining, by said one or more hardware processors, at least one of one or more composite matches and one or more ambiguous matches by performing a comparison of (i) one or more clauses in said ticket description from one or more registered tickets and (ii) said one or more corresponding entries stored in said one or more technology-specific service catalogs;
    identifying, by said one or more hardware processors, at least a subset of said one or more registered tickets for day-zero automation resolution based on said one or more composite matches;
    computing, by said one or more hardware processors, a match score for each registered ticket that pertains to said one or more ambiguous matches to obtain a set of ambiguously registered tickets, wherein said match score is computed based number of clauses from said ticket description in the set of ambiguously registered ticket being ambiguously matched with said one or more corresponding entries stored in said one or more technology-specific service catalogs; and
    computing, by said one or more hardware processors, a priority score for each issue in said set of ambiguously registered tickets based on an analysis being performed on each said issue in said set of ambiguously registered tickets based on one or more criteria comprising cost, effort benefit, quality benefit, and risk to automatically prioritize one or more issues from said set of ambiguously registered tickets.

2. The processor implemented method of claim 1, further comprising automatically generating, by said one or more hardware processors, a prioritized list of registered tickets from said set of ambiguously registered tickets based on said priority score.

3. The processor implemented method of claim 1, wherein the step of performing an analysis is preceded by generating one or more issue blueprints for one or more issues in a ticket description associated with said set of ambiguously registered tickets.

4. The processor implemented method of claim 3, wherein said one or more generated issue blueprints comprise at least one of an operational graph comprising at least one issue to be resolved, one or more entities associated with said at least one issue and a relationship across said one or more entities, wherein each of said one or more entities are modeled as a node.

5. The processor implemented method of claim 1, wherein the step of mapping said ticket description of said one or more registered tickets is preceded by removing at least one of one or more stop words, and one or more expressions from said ticket description.

6. The processor implemented method of claim 4, further comprising assigning a weight to each node, wherein said weight is indicative of criticality associated with said one or more entities and said at least one issue.

7. The processor implemented method of claim 1, further comprising automatically prioritizing one or more issues from said prioritized list of registered tickets for automating resolution based on said one or more criteria.

8. A system comprising:

a memory storing programmed instructions, and one or more technology-specific service catalogs;
one or more communication interfaces;
one or more hardware processors coupled to a memory using said one or more communication interfaces, wherein said one or more hardware processors are configured by said programmed instructions to:

obtain one or more registered tickets comprising ticket description pertaining to one or more issues,
map said ticket description of said one or more registered tickets to one or more corresponding entries being present in said one or more technology-specific service catalogs stored in said memory,
determine at least one of one or more composite matches and one or more ambiguous matches by performing a comparison of (i) one or more clauses in said ticket description from one or more registered tickets and (ii) said one or more corresponding entries stored in said one or more technology-specific service catalogs,
identify at least a subset of said one or more registered tickets for day-zero automation resolution based on said one or more composite matches,
compute a match score for each registered ticket that pertains to said one or more ambiguous matches to obtain a set of ambiguously registered tickets, wherein said match score is computed based number of clauses from said ticket description in the set of ambiguously registered ticket being ambiguously matched with said one or more corresponding entries stored in said one or more technology-specific service catalogs, and
compute a priority score for each issue in said set of ambiguously registered tickets by performing an analysis on each said issue in said set of ambiguously registered tickets based on one or more criteria comprising cost, effort benefit, quality benefit, and risk to automatically prioritize one or more issues from said set of ambiguously registered tickets.

9. The system of claim 8, wherein said one or more hardware processors are further configured by said programmed instructions to automatically generate a prioritized list of registered tickets from said set of ambiguously registered tickets based on said priority score.

10. The system of claim 8, wherein the step of performing an analysis is preceded by generating one or more issue blueprints for one or more issues in a ticket description associated with said set of ambiguously registered tickets, wherein said one or more generated issue blueprints comprise at least one of an operational graph comprising at least one issue to be resolved, one or more entities associated with said at least one issue and a relationship across said one or more entities, and wherein each of said one or more entities are modeled as a node.

11. The system of claim 10, wherein said one or more hardware processors are further configured by said programmed instructions to assign a weight to each node, wherein said weight is indicative of criticality associated with said one or more entities and said at least one issue.

12. The system of claim 9, further comprising automatically prioritizing one or more issues from said prioritized list of registered tickets for automating resolution based on said one or more criteria.

13. One or more non-transitory machine readable information storage mediums comprising one or more instructions which when executed by one or more hardware processors causes:

   obtaining one or more registered tickets comprising ticket description pertaining to one or more issues;
   mapping said ticket description of said one or more registered tickets to one or more corresponding entries being present in one or more technology-specific service catalogs stored in a memory;
   determining, by said one or more hardware processors, at least one of one or more composite matches and one or more ambiguous matches by performing a comparison of (i) one or more clauses in said ticket description from one or more registered tickets and (ii) said one or more corresponding entries stored in said one or more technology-specific service catalogs;
   identifying, by said one or more hardware processors, at least a subset of said one or more registered tickets for day-zero automation resolution based on said one or more composite matches;
   computing, by said one or more hardware processors, a match score for each registered ticket that pertains to said one or more ambiguous matches to obtain a set of ambiguously registered tickets, wherein said match score is computed based number of clauses from said ticket description in the set of ambiguously registered ticket being ambiguously matched with said one or more corresponding entries stored in said one or more technology-specific service catalogs; and
   computing, by said one or more hardware processors, a priority score for each issue in said set of ambiguously registered tickets based on an analysis being performed on each said issue in said set of ambiguously registered tickets based on one or more criteria comprising cost, effort benefit, quality benefit, and risk to automatically prioritize one or more issues from said set of ambiguously registered tickets.

14. The one or more non-transitory machine readable information storage mediums of claim 13, further comprising automatically generating, by said one or more hardware processors, a prioritized list of registered tickets from said set of ambiguously registered tickets based on said priority score.

15. The one or more non-transitory machine readable information storage mediums of claim 13, wherein the step of performing an analysis is preceded by generating one or more issue blueprints for one or more issues in a ticket. description associated with said set of ambiguously registered tickets.

SYSTEM
100

MEMORY
102

HARDWARE PROCESSOR
104

INTERFACE
106

**Figure 1**

Obtain one or more registered tickets comprising ticket description pertaining to one or more issues ~202

Map the ticket description of the registered tickets to one or more corresponding entries being present in one or more technology-specific service catalogs stored ~204

Determine at least one of composite matches and ambiguous matches by performing a comparison of (i) clauses in the ticket description from the registered tickets and (ii) the the corresponding entries stored in the the technology-specific service catalogs ~206

Identify at least a subset of the one or more registered tickets for day-zero automation resolution based on the composite matches ~208

Compute a match score for each registered ticket that pertains to the one or more ambiguous matches to obtain a set of ambiguously registered tickets ~210

Compute a priority score for each issue in the set of ambiguously registered tickets based on an analysis being performed on each issue in the set of ambiguously registered tickets based on criteria comprising cost, effort benefit, quality benefit, and risk to automatically prioritize issues from the set of ambiguously registered tickets ~212

**Figure 2**

| | Issue | Count |
|---|---|---|
| | SC Item: Check Swap Space Usage | 6 |
| | SC Item: Delete a File | 19 |

Day-zero automation → 25 tickets 2 catalog items

80 tickets 5 issues

| Issue | Count | Rank |
|---|---|---|
| Connection broken | 18 | 1 |
| Unable to Login | 20 | 2 |
| Path not found | 30 | 3 |
| Command prompt launch error | 5 | 4 |
| Filesystem full | 7 | 5 |

Issue rank algorithm

80 tickets 5 issues 5 ranks

Issue rank algorithm

80 tickets 5 issues 5 ranks 2 months

| Label | Day zero | Month 1 | Month 2 |
|---|---|---|---|
| Issues | • SC Item: Check Swap Space Usage<br>• SC Item: Delete a File | • Connection broken<br>• Unable to Login | • Path not found<br>• Command prompt launch error<br>• Filesystem full |
| Ticket volume | 25 | 38 | |
| Cumulative % | 23 % | 60 % | |

**Figure 3**

## Service catalog

| ID | Service catalog entry | Action keywords | Object keywords |
|----|----------------------|-----------------|-----------------|
| | SC Item: Server Antivirus Service | | |
| 1 | Fails to Stop | Stop, Disabl | Antivirus , Windows |
| 2 | SC Item: Uninstall a Patch | Unistal, rollback | patch, Windows |
| 3 | SC Item: Delete a File | Delet, remov | file |
| 4 | SC Item: Check Swap Space Usage | utiliz, use | swap |

**Figure 4(a)**

## Mapping ticket descriptions to service catalog

| ID | Ticket descriptions | Cleaned description | Matching action keywords | Matching object keywords | Matching service catalog ID |
|----|--------------------|--------------------|------------------------|------------------------|---------------------------|
| 1 | z077205 - P:\ - Time Tracker 2012 - file delete | file delete | Delet | file | 3 |
| 2 | 4-HELP W221719 - Network Drive - Remove File - Request | file remove request | Remov | file | 3 |
| 3 | File Restore - \\ttcfile10\build Public file deleted | file restore public file delete | Delet | file | 3 |
| 4 | 62M7XN1 - Need to delete file from M drive. | need delete file drive | Delet | file | 3 |
| 5 | Wintel Server ttcarbor01 Need to delete file from drive | need delete file drive | delet | file | 3 |

**Figure 4(b)**

EP 3 118 807 A1

Figure 5

## Cost

| ID | Issue | $E_{fixed}$ | $E_{recur}$ | C | $C_{norm}$ |
|----|-------|-------------|-------------|---|------------|
| 1 | Connection broken | 20 | 5 | 25 | 1 |
| 2 | Unable to Login | 10 | 1 | 11 | 0.44 |

$$C(Issue1) > C(Issue2)$$

## Effort Benefit

| ID | Issue | Vol | $E^M$ | $AF_{effort}$ | E | $E_{norm}$ |
|----|-------|-----|-------|---------------|---|------------|
| 1 | Connection broken | 18 | 1 | 0.9 | 16.2 | 1 |
| 2 | Unable to Login | 20 | 2 | 0.2 | 8 | 0.49 |

$$E(Issue1) > E(Issue2)$$

## Quality Benefit

| ID | Issue | Mean | Sd | $AF_{time}$ | Q | $Q_{norm}$ |
|----|-------|------|-----|-------------|-----|------------|
| 1 | Connection broken | 10 | 1 | 0.9 | 9 | 0.02 |
| 2 | Unable to Login | 50 | 10 | 0.9 | 450 | 1 |

$$Q(Issue1) < Q(Issue2)$$

## Risk

| ID | Issue | CI | $R_{CI}$ | Resolver | $R_{resolver}$ | R | $R_{norm}$ |
|----|-------|------|----------|----------|----------------|-----|------------|
| 1 | Connection broken | 1/10 | 0.1 | 1/25 | 0.04 | 0.1 | 0.11 |
| 2 | Unable to Login | 9/10 | 0.9 | 20/25 | 0.8 | 0.9 | 1 |

$$R(Issue1) < R(Issue2)$$

## Issue Score

| ID | Issue | $C_{norm}$ | $E_{norm}$ | $Q_{norm}$ | $R_{norm}$ | Score |
|----|-------|------------|------------|------------|------------|-------|
| 1 | Connection broken | 1 | 1 | 0.02 | 0.11 | 0.0022 |
| 2 | Unable to Login | 0.44 | 0.49 | 1 | 1 | 1.1136 |

**Figure 6**

EP 3 118 807 A1

| Issue | Effort person hours | Time weeks | EndTime weeks | | Week 1 | | | | | | Week 2 | | | | |
|---|---|---|---|---|---|---|---|---|---|---|---|---|---|---|---|
| | | | | Day 0 | Day1 | Day2 | Day3 | Day4 | Day5 | Day1 | Day2 | Day3 | Day4 | Day5 | |
| SC Item: Check Swap Space Usage | | | | | | | | | | | | | | | |
| SC Item: Delete a File | | | | | | | | | | | | | | | |
| Connection broken | 25 | 0.31 | 0.31 | | | | | | | | | | | | |
| Unable to Login | 11 | 0.13 | 0.45 | | | | | | | | | | | | |
| Path not found | 50 | 0.62 | 1.07 | | | | | | | | | | | | |
| Command prompt launch error | 40 | 0.5 | 1.57 | | | | | | | | | | | | |
| Filesystem full | 30 | 0.37 | 1.95 | | | | | | | | | | | | |

**Figure 7**

**Figure 8**

**Figure 9**

| | Day zero | Month 1 | Month 2 | Month 3 | Month 4 | Month 5 | Month 6 | Total |
|---|---|---|---|---|---|---|---|---|
| Issue count | 2 | 4 | 3 | 4 | 4 | 4 | 4 | 25 |
| Volume | 10164 | 4896 | 6020 | 1480 | 2842 | 1240 | 544 | 27186 |
| Effort | 366155 | 153095 | 37744 | 44007 | 22755 | 16944 | 9655 | 284200 |

**Figure 10**

EP 3 118 807 A1

Procedures: 3

Cis: 502/2744

Volume=649
Effort=0.24 hour/ticket

Runbook: 1

Server offline after MS Patching

Month 6/6

Resolver: 22/33

**Figure 11**

| | Day zero | Month 1 | Month 2 | Month 3 | Month 4 | Month 5 | Total |
|---|---|---|---|---|---|---|---|
| Issue count | 18 | 5 | 4 | 5 | 6 | 6 | 44 |
| volume | 2010 | 913 | 293 | 393 | 386 | 377 | 4372 |
| effort | 624.7 | 214.24 | 93.98 | 185.69 | 184.4 | 77.35 | 1380.36 |

Figure 12

EP 3 118 807 A1

Europäisches
Patentamt

European
Patent Office

Office européen
des brevets

# EUROPEAN SEARCH REPORT

Application Number

EP 16 17 9703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/325254 A1 (MANI SENTHIL K K [IN] ET AL) 30 October 2014 (2014-10-30)<br>* abstract *<br>* figures 1-11 *<br>* paragraph [0001] - paragraph [0006] *<br>* paragraph [0023] - paragraph [0069] *<br>* claims 1-20 * | 1-15 | INV.<br>G06Q50/04 |
| X | US 2014/129536 A1 (ANAND RANGACHARI [US] ET AL) 8 May 2014 (2014-05-08)<br>* abstract *<br>* figures 1-9D *<br>* paragraph [0001] - paragraph [0005] *<br>* paragraph [0020] - paragraph [0071] *<br>* claims 1-27 * | 1-15 | |
| X | US 2010/082620 A1 (JENNINGS III RAYMOND B [US] ET AL) 1 April 2010 (2010-04-01)<br>* figures 1-7 *<br>* paragraph [0001] - paragraph [0009] *<br>* paragraph [0019] - paragraph [0080] *<br>* claims 1-25 * | 1-15 | TECHNICAL FIELDS SEARCHED (IPC)<br><br>G06Q |

The present search report has been drawn up for all claims

| Place of search | Date of completion of the search | Examiner |
|---|---|---|
| The Hague | 2 November 2016 | Bassanini, Anna |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 17 9703

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2016

| Patent document cited in search report | Publication date | Patent family member(s) | Publication date |
|---|---|---|---|
| US 2014325254 A1 | 30-10-2014 | NONE | |
| US 2014129536 A1 | 08-05-2014 | US 2014129536 A1<br>US 2016196501 A1 | 08-05-2014<br>07-07-2016 |
| US 2010082620 A1 | 01-04-2010 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 2709MUM2015